# EUROPÄISCHE PATENTSCHRIFT

(11) **EP 0 680 441 B1**
(45) Veröffentlichungstag und Bekanntmachung des Hinweises auf die Patenterteilung: **09.10.1996**
(21) Anmeldenummer: 94902630.6
(22) Anmeldetag: 22.12.1993
(51) Int. Cl.: B65D 6/24

(54) **DEMONTIERBARE VERPACKUNGSEINHEIT**
DISMOUNTABLE PACKAGING UNIT
UNITE D'EMBALLAGE DEMONTABLE

(30) Priorität: 30.01.1993 DE 4302640
(43) Veröffentlichungstag der Anmeldung: 08.11.1995
(73) Patentinhaber: Lentjes, Theodor, D-44229 Dortmund (DE); LENTJES, Carsten, D-44267 Dortmund (DE); FERNHOLZ, Werner, D-58540 Meinerzhagen (DE)
(72) Erfinder: Lentjes, Theodor, D-44229 Dortmund (DE); LENTJES, Carsten, D-44267 Dortmund (DE); FERNHOLZ, Werner, D-58540 Meinerzhagen (DE)
(74) Vertreter: Becker, Thomas, Dr., Dipl.-Ing.
(86) Internationale Anmeldenummer: DE9301247
(87) Internationale Veröffentlichungsnummer: WO9416954

(56) Entgegenhaltungen:
- EP-A- 0 286 271
- DE-A- 3 820 999
- GB-A- 1 018 243
- GB-A- 2 046 217

## Beschreibung

Die Erfindung betrifft eine demontierbare Verpackungseinheit mit den Merkmalen des Oberbegriffs von Anspruch 1.

Eine solche Verpackungseinheit ist aus der DE 38 20 999 A1 bekannt. Dabei werden die Wände mit Hilfe von Kniehebelverschlüssen untereinander verbunden. Die Verschlüsse sind jeweils an dem Rahmen einer Wand befestigt und lösbar in einem Rahmen einer angrenzenden Wand befestigbar.

Darüber hinaus sind verschiedene Typen von Verpackungen bekannt. Die vorliegende Erfindung betrifft eine TransportVerpackung. Bekannte Transportverpackungen sind zum Beispiel Kartons aus Pappe oder Container aus Stahl. Kartons haben den Nachteil, daß sie aus Stabilitätsgründen nur ein beschränktes Volumen aufweisen können. Ein weiterer Nachteil besteht darin, daß sie in der Regel nur einmal benutzt werden können. Dies gilt auch dann, wenn der Versender die Kartons zurücknimmt, weil die Kartons nach einem ersten Transport meist derart demoliert sind, daß sie nicht wiederverwendet werden können.

Um größere Waren oder größere Warenmengen zu transportieren, sind größere Container deshalb von Vorteil. Ihr Nachteil besteht aber darin, daß sie starr sind und zum Rücktransport ein großes Tansportvolumen beanspruchen. Ein weiterer Nachteil besteht darin, daß sie meist nur von oben befüllbar sind.

Derartige Container werden zum Beispiel verwendet, um größere Mengen von Joghurt- oder Quarkbechern vom Hersteller zu einer Molkerei zu transportieren. Sowohl die Bestückung des Containers als auch die Entnahme bereitet aber Schwierigkeiten, wenn der Container nur von oben zugänglich ist.

Darüber hinaus sind die genannten Stahlcontainer schwer und führen entsprechend zu einem erhöhten Energieverbrauch des Transportfahrzeuges.

Auch eine Stapelbarkeit der Container ist nicht ohne weiteres möglich, weil die aufeinander gestapelten Container während des Tansportes verrutschen können, sofern sie nicht durch zusätzliche Sicherungsmaßnahmen gegen Verrutschen geschützt werden.

Dementsprechend liegt der Erfindung die Aufgabe zugrunde, eine Verpackungseinheit der eingangs genannten Art zur Verfügung zu stellen, die die vorstehend beschriebenen Nachteile nicht aufweist und insbesondere leicht montierbar und demontierbar ist.

Dabei geht die Erfindung zunächst von der Überlegung aus, die Verpackungseinheit analog der DE 38 20 999 A1 demontierbar zu gestalten. Dies hat auch bei großvolumigen Verpackungseinheiten den Vorteil, daß sie beim Rücktransport in zerlegter Form nur wenig Volumen beanspruchen und entsprechend auf der Ladefläche zum Beispiel eines LKW's zusätzlicher Raum geschaffen wird, um andere Güter aufzunehmen.

Ein weiterer Gedanke der Erfindung besteht darin, die Verpackungseinheit so zu gestalten, daß sie ohne Werkzeuge wie die in DE 38 20 999 A1 genannten Kniehebelverschlüsse leicht zusammensetzbar ist, gleichwohl eine gute Stabilität aufweist und vor allen Dingen mehrere Verpackungseinheiten aufeinander stapelbar sind.

Ausgehend von diesem Grundgedanken schlägt die Erfindung in ihrer allgemeinsten Ausführungsform eine demontierbare Verpackungseinheit mit den Merkmalen gemäß Anspruch 1 vor, deren konstruktive Form und Funktion nachstehend beschrieben werden:
- Einer, auf einen Boden aufsetzbaren Palette mit einem umlaufenden, schmalen Rand und einer gegenüber dem Rand versenkten, planen Auflagefläche. Die Oberseite der Palette ist also "wannenartig" gestaltet.
- Die Verpackungseinheit umfaßt weiter einen Boden, der wie folgt aufgebaut ist:
- Er weist randseitig nach unten vorstehende Stege auf, die mit ihren vertikalen Außenflächen gegen die vertikalen Innenflächen des Palettenrandes zur Anlage bringbar sind. Mit anderen Worten: der Boden ist so gestaltet, daß er sich selbst in der wannenartigen Vertiefung der Palette zentriert und gegenüber der Palette gegen seitliches Verrutschen gesichert ist.
- Auf der Oberseite weist der Boden randseitig eine umlaufende, nutartige Vertiefung auf. Bei einem rechteckigen Boden setzt sich die Vertiefung danach aus vier Nutabschnitten zusammen, die zusammen eine rechteckige Form aufweisen.
- Darüber hinaus besteht die Verpackungseinheit aus vier Wänden, die mit ihren unteren Seitenkanten in die korrespondierenden Abschnitte der nutartigen Vertiefung des Bodens einsteckbar sind. Die nutartige Vertiefung auf der Oberseite des Bodens dient also zur Aufnahme und Zentrierung der Wände, so daß diese mit ihren korrespondierenden Seitenkanben unmittelbar aneinanderliegen. Im übrigen dienen die Verbindungselemente dazu, die vier Wände im Eckbereich Untereinander zu befestigen. Die Verbindungselemente werden deshalb vorzugsweise in den oberen Ecken der aneinendergrenzenden Wände angebracht.
- Schließlich weist die Verpackungseinheit einen Deckel auf, der auf die oberen Stirnkanten der Wände aufsetzbar ist, wobei der Deckel mit dem Boden im wesentlichen baugleich sein soll. Der Deckel stabilisiert dabei zusätzlich den so gebildeten "Container" beziehungsweise seine Wände und er dient gleichzeitig als Boden für eine Erweiterung der Verpackungseinheit mit vier weiteren Wänden, entsprechenden Verbindungselementen und einem zweiten Deckel.

Aus vorstehender Beschreibung ergibt sich ohne weiteres, daß die demontierbare Verpackungseinheit quasi beliebig ausbaufähig ist. So können unter Verwendung einer Palette zwei, drei oder mehr Einheiten aufeinandergesetzt werden, wobei der Deckel einer Einheit unmittelbar als Boden der darüber angeordneten Einheit Verwendung finden kann, weshalb der Baugleichheit von Deckel und Boden eine wesentliche Bedeutung zukommt.

Zum Befüllen dieser Verpackungseinheit können zunächst drei Wände auf den Boden aufgesetzt und über die Verbindungselemente verbunden werden. Anschließend kann die Befüllung der Verpackungseinheit seitlich erfolgen. Hierdurch wird die Bestückung, zum Beispiel mit Hilfe von Gabelstaplern, wesentlich erleichtert.

Sobald die Einheit gefüllt ist, wird die vierte Wand eingesetzt und über die Verbindungselemente festgelegt, ein Deckel (Boden) aufgesetzt und bei Bedarf eine weitere Einheit aus vier Wänden, Verbindungselementen und Deckel (Boden) auf die zuvor beschriebene Art und Weise aufgesetzt und befüllt.

Die bodenseitige Palette dient dazu, der so gebildeten Verpackungseinheit zusätzliche Stabilität zu geben, insbesondere, um die aus mehreren "Containern" zusammengesetzte Verpackungseinheit insgesamt zum Beispiel mit einem Gabelstapler auf einen LKW zu setzen.

Ist - im beschriebenen Beispielsfall - die Verpackungseinheit zum Abnehmer (hier: Molkerei) transportiert worden, werden die einzelnen "Container" umgekehrt wie vorstehend bei der Befüllung beschrieben geöffnet, danach werden die Becher entnommen, die entleerte Einheit wird dann zerlegt, wobei die jeweils flachen Wände und Böden einfach aufeinandergelegt werden können. Auf diese Weise wird das Volumen, das für den Rücktransport der Verpackungseinheit notwendig ist, um circa 90 % verringert.

Nach einer Ausführungsform sollen die Stege des Bodens als parallel zueinanderverlaufende Doppelstege ausgebildet sein, die zwischen sich eine nutartig umlaufende Rille ausbilden. Es ist offensichtlich, daß in diesem Fall nur die Außenfläche des außenlaufenden Steges gegen die Innenfläche des Palettenrandes anliegt. Die Doppelsteg-Form hat neben einem Armierungseffekt für den Boden den weiteren Vorteil, daß der Boden bei Verwendung als Deckel so auf die Wände aufgesetzt werden kann, daß die oberen Stirnflächen der Wände in der Rille verlaufen, woraus sich eine optimale Zentrierung und Stabilisierung der Wände beziehungsweise der gesamten Baueinheit ergibt.

Die Stege können kontinuierlich umlaufend gestaltet sein. Nach einer Ausführungsform bestehen die Stege des Bodens aber aus einer Vielzahl diskreter Füße. Die Füße sind dann vorzugsweise alternierend beidseitig der nutartigen Rille angeordnet, so daß sie - bei Verwendung als Deckel - jeweils abschnittweise den Randbereich der Wände zwischen sich aufnehmen.

Nach einer weiteren Ausführungsform soll die nutartige Vertiefung auf der Oberseite des Bodens im wesentlichen in vertikaler Verlängerung der nutartigen Rille auf der Unterseite des Bodens verlaufen. Damit wird es ermöglicht, mehrere Baueinheiten in exakt vertikaler (fluchtender) Ausrichtung übereinander anzuordnen.

Um die Zentrierung der Wände in der nutartigen Vertiefung und/oder in der nutartigen Rille weiter zu optimieren, kann die Vertiefung und/oder Rille im Querschnitt ein V-Profil aufweisen. Beim Zusammenbau der Verpackungseinheit wird das Einsetzen der Wände beziehungsweise das Aufsetzen des Deckels vereinfacht und es entfällt jede manuelle Zentrierung.

Die im Eckbereich benachbarter Wände anzuordnenden Verbindungselemente können auf unterschiedliche Art und Weise gestaltet sein. Es ist besonders einfach, aufsteckbare Winkelprofile zu verwenden, die von oben auf den Eckbereich aufgeklemmt werden. Sie lassen sich bei der Demontage der Verpackungseinheit ebensoleicht wieder lösen, tragen aber während des Transportes maßgeblich zur Stabilität der Verpackungseinheit bei.

Die vorstehend beschriebene Gestaltung ermöglicht es, für die Palette, den Boden, den Deckel, die Verbindungselemente und/oder die Wände auf Kunststoffteile zurückzugreifen. Gegenüber Metallteilen sind Kunststoffteile leichter und verringern so den Energiebedarf für das Transportfahrzeug. Die einzelnen Teile können sickenartige Erhebungen und/oder Vertiefungen aufweisen, wodurch die Stabilität der Teile erhöht wird.

Aufgrund der Tatsache, daß die Verpackungseinheit als Transportverpackung dienen soll, können die einzelnen Teile der Verpackungseinheit aus einem Recyclingkunststoff bestehen. Auf diese Weise wird gleichzeitig eine erhebliche Menge an Kunststoff-Abfallmaterial einer sinnvollen Wiederverwendung zugeführt.

Aufgrund der dargestellten Geometrie der Bauteile der Verpackungseinheit (mit nutartigen Vertiefungen, Rillen, Vor- und Rücksprüngen) schlägt die Erfindung vor, Kunststoffteile zu verwenden, die im Streckformverfahren (Tiefziehverfahren) hergestellt sind. Diese Verfahrenstechnologie ist nicht nur besonders einfach, sondern auch preiswert. Die Einzelteile der Verpackungseinheit lassen sich dabei jeweils in einem einzigen Arbeitsgang herstellen.

Schließlich sieht eine Ausführungsform der Erfindung vor, daß der Boden (Deckel) einen umlaufenden, im wesentlichen horizontal abstehenden Randbereich aufweist, der dazu dient, auch einzelne, aus vier Wänden und einem Boden bestehende Verpackungseinheiten zum Beispiel mit einem Gabelstapler zu ergreifen und an die gewünschte Stelle zu transportieren.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher dargestellt. Dabei zeigen:
- Figur 1:: eine perspektivische Ansicht einer Palette
- Figur 2:: eine teilweise zusammengesetzte einstufige Verpackungseinheit,
- Figur 3:: eine mit einem Deckel abgeschlossene Verpackungseinheit,
- Figur 4:: eine Verpackungseinheit gemäß Figur 3, wobei der Deckel umgedreht ist,
- Figur 5:: eine zusammengelegte Verpackungseinheit.

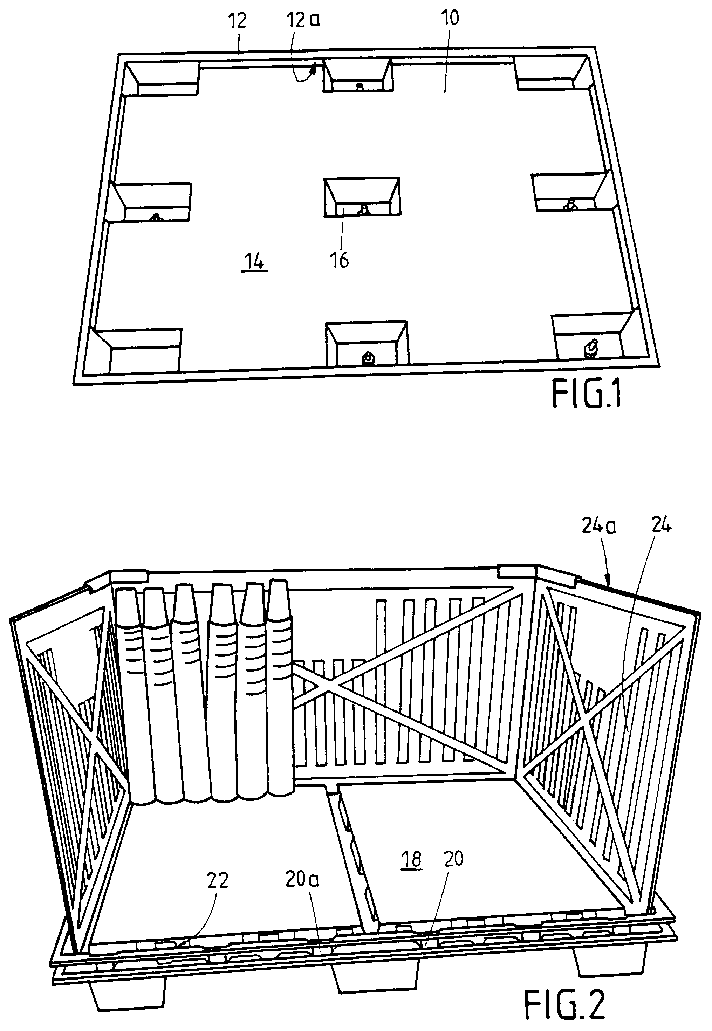

Die in Figur 1 dargestellte Palette einer erfindungsgemäßen Verpackungseinheit trägt das Bezugszeichen 10. Die Palette 10 ist aus einem Recycling-Polypropylen im Streckformverfahren hergestellt. Die Palette besitzt in der Aufsicht eine Rechteckform und weist einen umlaufenden dünnen Rand 12 auf, der eine geringfügig nach innen abgeschrägte Innenfläche 12a aufweist. Hierdurch erhält die Palette in der Aufsicht eine Art Wannenform, wobei die ebene Auflagefläche 14 insgesamt sechs sickenartige Vertiefungen 16 aufweist, die der mechanischen Stabilisierung der Palette 10 dienen. Die Vertiefungen 16 sind so angeordnet, daß ein Gabelstapler zwischen den drei Reihen beabstandeter Vertiefungen mit seinen Gabeln hineinfahren kann.

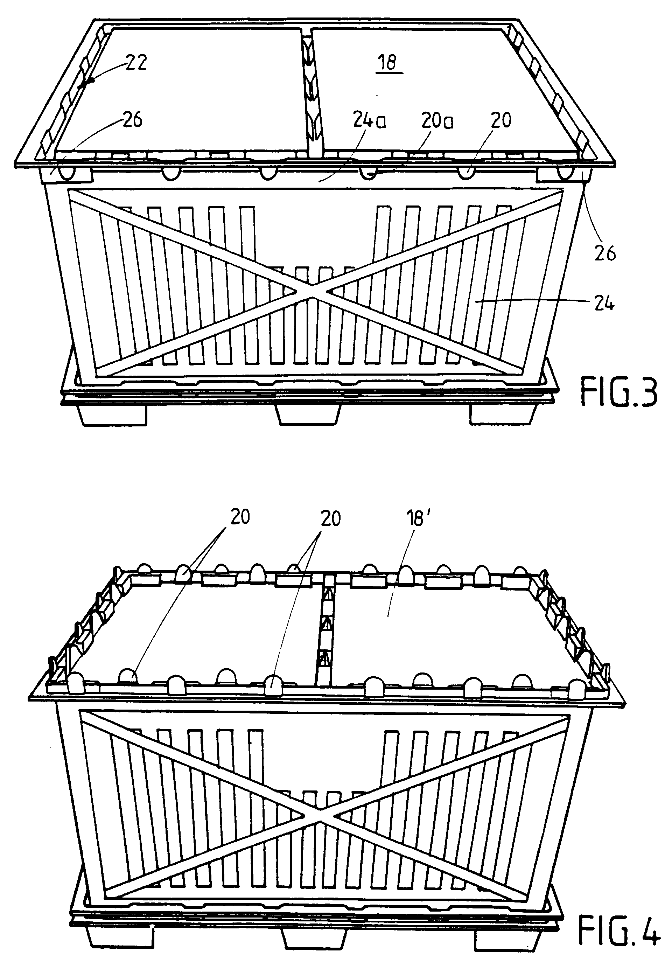

Figur 2 zeigt eine Verpackungseinheit in teilweise zusammengesetzter Form. Zu erkennen ist ein Boden 18. Von der Unterseite des Bodens stehen randseitig Füße 20 vertikal nach unten ab. Die Füße 20 sind - wie insbesondere Figur 3 zeigt - alternierend links und rechts einer zwischen ihnen gedachten Linie angeordnet, so daß in Längsrichtung der Kanten des Bodens 18 betrachtet, zwischen den Füßen 20 eine nutartige Rille ausgebildet wird. Aufgabe und Funktion der Rille werden anhand von Figur 3 nachstehend noch näher beschrieben.

Die in der äußeren Reihe liegenden Füße 20 liegen mit ihren Außenflächen 20a gegen die Innenfläche 12a des Randes 12 der Palette 10 an, so daß der Boden 18 sicher auf der Palette 10 aufliegt und gegen seitliches Verrutschen gesichert ist.

Auf der Oberseite des Bodens 18 verläuft randseitig eine umlaufende nutartige Vertiefung 22, die, wie die Rille, im Querschnitt ein V-Profil aufweist. In der nutartigen Vertiefung liegen Wände 24 ein (in Figur 2: zunächst drei Wände 24), die in ihrem Anschlußbereich durch Winkelprofile 26 untereinander zusätzlich stabilisiert werden, wobei die Winkelprofile 26 im Eckbereich auf die oberen Stirnkanten 24a der Wände aufgesteckt sind.

Sobald die Verpackungseinheit in der in Figur 2 dargestellten Weise zusammengebaut ist, kann sie befüllt werden, zum Beispiel - wie hier dargestellt - mit ineinander zu Reihen gestapelten Joghurtbechern.

Ist das Behältnis gefüllt, wird die vordere Wand 24 in die nutartige Vertiefung 22 eingesetzt und mit zwei weiteren Winkelprofilen 26 mit den Seitenwänden 24 verbunden. Anschließend wird ein Deckel 18' auf die Wände 24 aufgesetzt, wobei der Deckel 18' mit dem Boden 18 baugleich ist und in derselben Ausrichtung wie der Boden 18 aufgesetzt wird. Wie sich Figur 3 entnehmen läßt, tragen die alternierend angeordneten Füße 20 hier dazu bei, die oberen Stirnkanten 24a der Wände 24 jeweils zwischen sich festzulegen, wodurch das Behältnis eine weitere mechanische Stabilität erhält.

Aus Figur 3 läßt sich entnehmen, daß nach dem Aufsetzen des Deckels 18' gleichzeitig wieder ein Boden 18 zur Verfügung steht, auf den eine weitere Baueinheit aus vier Wänden 24 und korrespondierenden Zubehörteilen aufgesetzt werden kann.

Auf diese Weise läßt sich eine dritte, vierte oder weitere Verpackungseinheit aufbauen.

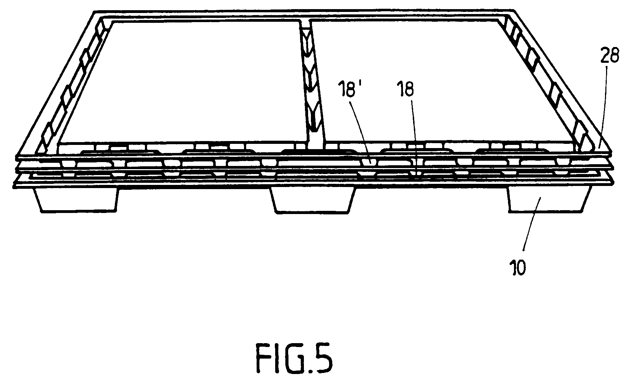

Bei der obersten Einheit wird der Deckel 18' umgekehrt wie zuvor beschrieben auf die Wände 24 aufgesetzt. Diese Anordnung zeigt Figur 4.

In diesem Fall liegen die oberen Stirnflächen 24a der Wände 24 also in der nutartigen Vertiefung 22 des Deckels 18' ein und die Füße 20 stehen nach oben ab.

Dadurch, daß die nutartige Rille zwischen den Füßen 20 vertikal fluchtend zur nutartigen Vertiefung 22 angeordnet ist, fluchten auch die Wände 24 übereinander angeordneter Containereinheiten miteinander. Auch dies stabilisiert eine aus mehreren Containereinheiten aufgebaute Verpackungseinheit weiter.

Ist die Verpackungseinheit zum Bestimmungsort transportiert worden, wird sie umgekehrt wie zuvor beschrieben wieder demontiert, das Verpackungsgut entnommen und schließlich werden die Wände 24, die Böden 18 und Deckel 18' einfach aufeinandergelegt, wie dies Figur 5 zeigt, wobei die Palette 10 als Unterlagsfläche dient. Eine mittige Vertiefung 30 dient dazu, etwaige Zwischenwände aufzunehmen. Die Wandteile können entsprechend angepaßt werden.

Ein Vergleich der Figuren 4 und 5 zeigt, daß das Volumen für den Rücktransport drastisch reduziert wird. Auf dem Transportfahrzeug steht neuer Raum zur Verfügung, um weitere Güter aufnehmen zu können.

Soweit dies gewünscht wird, können auch einzelne Verpackungseinheiten, bestehend aus mindestens einem Boden und vier Seitenwänden getrennt abgenommen werden, wozu der umlaufende seitliche Flanschrand 28 des Bodens 18 (Deckels 18') dient.

Wenngleich sich eine rechteckige Grundform von Palette 10 und Boden 18 beziehungsweise Deckel 18' anbietet, so ist es selbstverständlich, daß die Querschnittsform auch quadratisch, ebenso aber auch fünfeckig oder mehreckig sein kann. Bei einer Fünfeckform werden dann entsprechend fünf Seitenwände benötigt.

## Patentansprüche

1. Demontierbare Verpackungseinheit mit einer, auf einem Boden aufsetzbaren Palette (10), einem Boden (18), mindestens vier Wänden (24) die im Bereich ihrer korrespondierenden vertikalen Seitenkanten lösbar über Verbindungselemente (26) verbindbar sowie einem, auf die oberen Stirnkanten (24a) der Wände (24) aufsetzbaren Deckel (18'), wobei die Palette (10) einen umlaufenden, dünnen Rand (12) und eine gegenüber dem Rand (12) versenkte, plane Auflagefläche (14) aufweist, dadurch gekennzeichnet, daß
1.1 der Boden (18)
1.1.1 randseitig nach unten vorstehende Stege (20) aufweist, die mit ihren vertikalen Außenflächen (20a) gegen die vertikalen Innenflächen (12a) des Palettenrandes (12) zur Anlage bringbar sind; und
1.1.2 auf seiner Oberseite im Randbereich eine umlaufende, nutartige Vertiefung (22) aufweist, und
1.2 die Wände (24) mit ihren unteren Seitenkanten in korrespondierende Abschnitte der nutartigen Vertiefung (22) des Bodens (18) einsteckbar sind, und
1.3 der, auf die oberen Stirnkanten (24a) der Wände (24) aufsetzbare Deckel (18') mit dem Boden (18) im wesentlichen baugleich ist.

2. Verpackungseinheit nach Anspruch 1, bei der die Stege (20) des Bodens (18) als parallel zueinander verlaufende Doppelstege ausgebildet sind, die zwischen sich eine nutartige Rille ausbilden.

3. Verpackungseinheit nach Anspruch 1 oder 2, bei der die Stege (20) des Bodens (18) aus einer Vielzahl diskreter Füße bestehen.

4. Verpackungseinheit nach Anspruch 3, bei der die Füße alternierend (wechselweise) beidseitig der nutartigen Rille angeordnet sind.

5. Verpackungseinheit nach einem der Ansprüche 1 bis 4, bei der die nutartige Vertiefung (22) auf der Oberseite des Bodens (18) in vertikaler Verlängerung der nutartigen Rille auf der Unterseite des Bodens (18) verläuft.

6. Verpackungseinheit nach einem der Ansprüche 1 oder 2, bei der die nutartige Vertiefung (22) und/oder die nutartige Rille im Querschnitt ein V-Profil aufweisen.

7. Verpackungseinheit nach einem der Ansprüche 1 bis 6, bei der die Wände (24) über auf die Wände (24) aufsteckbare Winkelprofile (26) lösbar miteinander befestigbar sind.

8. Verpackungseinheit nach einem der Ansprüche 1 bis 7, bei der die Palette (10), der Boden (18), der Deckel (18'), die Verbindungselemente (26) und/oder die Wände (24) aus Kunststoff bestehen.

9. Verpackungseinheit nach Anspruch 8, bei der die Teile (10, 18, 18', 26, 24) aus einem Recyclingkunststoff bestehen.

10. Verpackungseinheit nach einem der Ansprüche 8 oder 9, bei der die Teile (10, 18, 18', 26, 24) im Streckformverfahren hergestellte Teile sind.

11. Verpackungseinheit nach einem der Ansprüche 1 bis 10, bei der der Boden (18) einen umlaufenden, horizontal vorstehenden Randbereich (28) aufweist.

## Claims

1. A dismantlable packaging unit with a pallet (10) which can be placed onto the ground, a base (18), at least four walls (24), which can be releasably connected via connecting elements (26) in the region of their corresponding vertical lateral edges, and a lid (18') which can be placed on top of the upper end faces (24a) of the walls (24), the pallet (10) comprising a thin, circumferential edge (12) and a bearing surface (14) which is recessed relative to the edge (12), characterised in that
1.1 the base (18)
1.1.1 comprises downwardly projecting webs (20) at its edge, which can be brought to rest with their vertical outer surfaces (20a) against the vertical inner surfaces (12a) of the pallet edge (12); and
1.1.2 comprises a circumferential, groove-like recess (22) in the edge region of its upper side, and
1.2 the walls (24) can be inserted with their lower lateral edges into corresponding sections of the groove-like recess (22) of the base (18), and
1.3 the lid (18') which can be placed onto the upper end faces (24a) of the walls (24) has substantially the same structure as the base (18).

2. A packaging unit according to claim 1, in which the webs (20) of the base (18) are constructed as double webs which extend parallel to one another and between them form a groove-like furrow.

3. A packaging unit according to claim 1 or 2, in which the webs (20) of the base (18) are formed by a plurality of separate feet.

4. A packaging unit according to claim 3, in which the feet are arranged alternately either side of the groove-like furrow.

5. A packaging unit according to one of claims 1 to 4, in which the groove-like recess (22) on the upper side of the base (18) extends as a vertical extension of the groove-like furrow on the underside of the base (18).

6. A packaging unit according to one of claims 1 or 2, in which the groove-like recess (22) and/or the groove-like furrow have a V-profile when viewed in cross section.

7. A packaging unit according to one of claims 1 to 6, in which the walls (24) can be releasably secured to one another by means of angle profiles (26) which can be fitted onto the walls (24).

8. A packaging unit according to one of claims 1 to 7, in which the pallet (10), the base (18), the lid (18'), the connecting elements (26) and/or the walls (24) are made of plastics material.

9. A packaging unit according to claim 8, in which the parts (10, 18, 18', 26, 24) are made of a recyclable plastics material.

10. A packaging unit according to one of claims 8 or 9, in which the parts (10, 18, 18', 26, 24) are manufactured by drape forming.

11. A packaging unit according to one of claims 1 to 10, in which the base (18) comprises a circumferential, horizontally projecting edge region (28).

## Revendications

1. Unité d'emballage démontable comprenant une palette (10) qui peut être posée sur un fond, un fond (18), au moins quatre parois (24), qui peuvent être assemblées de manière amovible dans la zone de leurs arêtes latérales verticales correspondantes par l'intermédiaire d'éléments de fixation (26), ainsi qu'un couvercle (18'), posé sur les arêtes frontales supérieures (24a) des parois (24), la palette (10) étant munie d'un bord (12) périphérique étroit et d'une surface de support (14) plane, en retrait par rapport au bord (12), caractérisée en ce que le fond (18) est muni sur son bord de languettes (20) en saillie vers le bas, dont les faces extérieures verticales (20a) viennent s'appuyer contre les faces intérieures verticales (12a) du bord de la palette (12) ; et le fond (18) est muni sur la face supérieure du bord d'une cavité (22) périphérique en forme de rainure, et les parois (24) peuvent s'emboîter avec leurs arêtes latérales inférieures dans des parties correspondantes de la cavité (22) en forme de rainure, réalisée dans le fond (18), et le couvercle (18'), posé sur les arêtes frontales supérieures (24a) des parois (24), est d'une conception identique à celle du fond (18).

2. Unité d'emballage selon la revendication 1, caractérisée en ce que les languettes (20) du fond (18) sont conçues comme des languettes doubles parallèles les unes par rapport aux autres, entre lesquelles se forme une fente formant une rainure.

3. Unité d'emballage selon la revendication 1 ou 2, caractérisée en ce que les languettes (20) du fond (18) sont constituées par un grand nombre de pieds séparés.

4. Unité d'emballage selon la revendication 3, caractérisée en ce que les pieds sont disposés alternativement de part et d'autre de la fente en forme de rainure.

5. Unité d'emballage selon l'une quelconque des revendications 1 à 4, caractérisée en ce que la cavité en forme de rainure (22) est disposée sur la face supérieure du fond (18) dans le prolongement vertical de la fente en forme de rainure, réalisée sur la face inférieure du fond (18).

6. Unité d'emballage selon la revendication 1 ou 2, caractérisée en ce que la section de la cavité en forme de rainure (22) et/ou de la fente en forme de rainure présente un profil en V.

7. Unité d'emballage selon l'une quelconque des revendications 1 à 6, caractérisée en ce que les parois (24) peuvent être fixées de manière amovible les unes aux autres, par l'intermédiaire de cornières (26) emboîtées sur les parois (24).

8. Unité d'emballage selon l'une quelconque des revendications 1 à 7, caractérisée en ce que la palette (10), le fond (18), le couvercle (18'), les éléments de fixation (26) et/ou les parois (24) sont réalisés dans un matériau synthétique.

9. Unité d'emballage selon la revendication 8, caractérisée en ce que les pièces (10, 18, 18', 26, 24) sont réalisées dans un matériau synthétique recyclable.

10. Unité d'emballage selon la revendication 8 ou 9, caractérisée en ce que les pièces (10, 18, 18', 26, 24) sont des pièces fabriquées par un procédé de formage par étirage.

11. Unité d'emballage selon l'une quelconque des revendications 1 à 10, caractérisée en ce que le fond (18) est muni d'un bord (28) périphérique, en saillie dans le plan horizontal.
